# EUROPÄISCHE PATENTSCHRIFT

(11) **EP 2 819 899 B1**
(45) Veröffentlichungstag und Bekanntmachung des Hinweises auf die Patenterteilung: **31.08.2016**
(21) Anmeldenummer: 13704432.7
(22) Anmeldetag: 14.02.2013
(51) Int. Cl.: B60T 8/36, B60T 8/40

(54) **VERFAHREN ZUM BETRIEB EINER BREMSANLAGE UND EINE BREMSANLAGE**
METHOD FOR OPERATING A BRAKE SYSTEM AND A BRAKE SYSTEM
PROCÉDÉ POUR LE FONCTIONNEMENT D'UN SYSTÈME DE FREINAGE, ET SYSTÈME DE FREINAGE

(30) Priorität: 28.02.2012 DE 102012203013; 12.12.2012 DE 102012222897
(43) Veröffentlichungstag der Anmeldung: 07.01.2015
(73) Patentinhaber: Continental Teves AG & Co. oHG, 60488 Frankfurt (DE)
(72) Erfinder: DRUMM, Stefan A., 55291 Saulheim (DE)
(86) Internationale Anmeldenummer: PCT/EP2013/052977
(87) Internationale Veröffentlichungsnummer: WO 2013/127639

(56) Entgegenhaltungen:
- EP-A1- 2 353 950
- WO-A1-99/39954
- WO-A2-2011/141158
- DE-A1- 3 801 505
- DE-A1- 4 029 793
- DE-A1- 19 543 582
- DE-A1-102010 040 097

## Beschreibung

Verfahren zum Betrieb einer Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, mit
- hydraulischen Radbremsen,
- einem Hauptbremszylinder mit wenigstens einem Druckraum, mit dessen Druck in der Rückfallbetriebsart wenigstens die Radbremsen einer Vorderachse des Kraftfahrzeugs beaufschlagbar sind,
- einem Druckmittelvorratsbehälter,
- einem Bremspedal zum Betätigen des Hauptbremszylinders,
- Bremskreisen, die Hauptbremszylinder- und Radbremsen-Druckräume, hydraulische Verbindungen und elektrohydraulische Steuerelemente aufweisen,
- einem elektrisch betätigbaren Trennventil je Bremskreis zum Trennen des Bremskreises in einen vom Fahrzeugführer und einen "by-wire" druckbeaufschlagbaren Bremskreisabschnitt,
- einem elektrisch betätigbaren Einlassventil und einem elektrisch betätigbaren Auslassventil je Radbremse zum Einstellen radindividueller Bremsdrücke,
- einer elektrisch steuerbaren Druck- und Volumenstelleinrichtung,
- einem elektrisch betätigbaren, insbesondere stromlos geschlossenen, Zuschaltventil je Bremskreis zur hydraulischen Verbindung der Druck- und Volumenstelleinrichtung mit dem "by-wire" druckbeaufschlagbaren Bremskreisabschnitt,
- einer mit zumindest einem Druckraum des Hauptbremszylinders hydraulisch verbindbaren Simulationseinrichtung, die mittels eines elektrisch oder mechanisch betätigbaren Simulatorfreigabeventils aktivierbar ist, mit einer voreingestellten Charakteristik, und die in der "Brake-by-wire"-Betriebsart dem Fahrzeugführer ein angenehmes Bremspedalgefühl vermittelt, und
- einer elektronischen Steuer- und Regeleinheit, insbesondere zur Ansteuerung der Druck- und Volumenstelleinrichtung, der Trennventile, der Zuschaltventile und des Simulatorfreigabeventils.

Eine derartige Bremsanlage für Kraftfahrzeuge ist aus der DE 10 2010 040 097 A1 bekannt. Die vorbekannte Bremsanlage ist als ein so genanntes offenes System konzipiert, bei dem ein bei Radbremsdruckmodulationsvorgängen anfallender Druckmittelüberschuss über eine hydraulische Rücklaufleitung zum Druckmittelvorratsbehälter geleitet wird. Nachteilig ist bei offenen Bremssystemen, dass bei einer Leckage eines Auslassventils der betroffene Bremskreis ausfällt. Ein weiterer Nachteil der bekannten Anordnung besteht darin, dass aufgrund dieses Ausfallrisikos als Auslassventile nur Sitzventile verwendet werden können, die von den Radbremsdrücken in Schließrichtung beaufschlagt werden. Damit sind als Auslassventile nur digital angesteuerte Sitzventile verwendbar, mit denen eine stufenlose, komfortable und geräuscharme Druckregelung nicht realisierbar ist. Ein analog gesteuerter, radindividueller Druckabbau ist mit den Auslassventilen der bekannten Anordnung nicht möglich, weil ein analog geregelter Betrieb eines Sitzventils die entgegengesetzte Durchflussrichtung voraussetzt. Mit dem gleichen Argument verbietet sich auch eine Verwendung der Einlassventile für einen radindividuell gesteuerten Druckabbau in Richtung zur Druckmittelbereitstellungseinrichtung. Weil diese in Druckaufbaurichtung analog steuerbaren Einlassventile in Druckabbau-Strömungsrichtung nicht kontrollierbar sind und diese sich "zuziehen" würden, ist jedem Einlassventil ein in Druckabbaurichtung öffnendes Rückschlagventil parallel geschaltet. Daher muss in der bekannten Anordnung die Druckmittelbereitstellungseinrichtung stets einen Druck bereit stellen, der mindestens so hoch ist, wie der höchste der geforderten Radbremsdrücke. Ein mit der steuerbaren Druckmittelbereitstellungseinrichtung durchgeführter Druckaufbau ist nur für die Radbremse mit dem höchsten, momentan geforderten Druck möglich, wobei die verbleibenden, niedrigeren Raddrücke über die analog steuerbaren Einlassventile aus dem Maximaldruck abgeleitet werden. Dies führt jedoch zu Radbremsverläufen mit geringerer Regelqualität, wenn die Differenzen der benötigten Raddrücke zum Maximaldruck gering sind. Mit diesem Druckregelkonzept ist bei vorgegebenen Soll-Radbremsdrücken der von der Druckmittelbereitstellungseinrichtung abzugebende Druckwert festgelegt. Dabei kann nicht genutzt werden, dass es einfacher ist, mit einer Druck- und Volumenstelleinrichtung ein exakt bemessenes Druckmittelvolumen bereit zu stellen als einen exakten Druck. Während ein benötigtes Volumen von der Druck- und Volumenstelleinrichtung einfach abgegeben und präzise dosiert werden kann, wird ein benötigter Druck dadurch eingestellt, dass mit einem Drucksensor der abgegebene Ist-Druck erfasst wird und ein Systemdruckregler die zum Annähern des Ist-Drucks an den Soll-Druck notwendige Druckmittelvolumen-änderung errechnet und umsetzt. Bei Verwendung des geschilderten Verfahrens zur Radbremsdruckregelung in der bekannten Anordnung ist eine akzeptable Regelqualität schwer zu erreichen.

Weitere Bremsanlagen für Kraftfahrzeuge sind aus der DE19543582A1, WO2011/141158A2 und DE4029793A1 bekannt.

Es ist daher Aufgabe der vorliegenden Erfindung, ein Verfahren zum Betrieb einer Bremsanlage der genannten Art vorzuschlagen, das eine Verbesserung der Regelqualität der Bremsvorgänge ermöglicht, insbesondere bei Regelvorgängen, die radindividuell unterschiedliche Radbremsdrücke erfordern.

Diese Aufgabe wird erfindungsgemäß durch ein Verfahren gemäß Anspruch 1 gelöst.

Der Erfindung liegt der Gedanke zugrunde, dass zum Einstellen radindividueller Bremsdrücke die Ein- und Auslassventile analog angesteuert werden, indem sie mit unterschiedlichen elektrischen Strömen beaufschlagt werden.

Vorteilhafte Weiterbildungen des erfindungsgemäßen Verfahrens ergeben sich aus den Unteransprüchen und der nachfolgenden Beschreibung anhand von Figuren.

Es zeigen schematisch:
- Fig. 1: ein erstes Ausführungsbeispiel einer Bremsanlage zur Durchführung eines erfindungsgemäßen Verfahrens, und
- Fig. 2: ein zweites Ausführungsbeispiel einer Bremsanlage zur Durchführung eines erfindungsgemäßen Verfahrens.

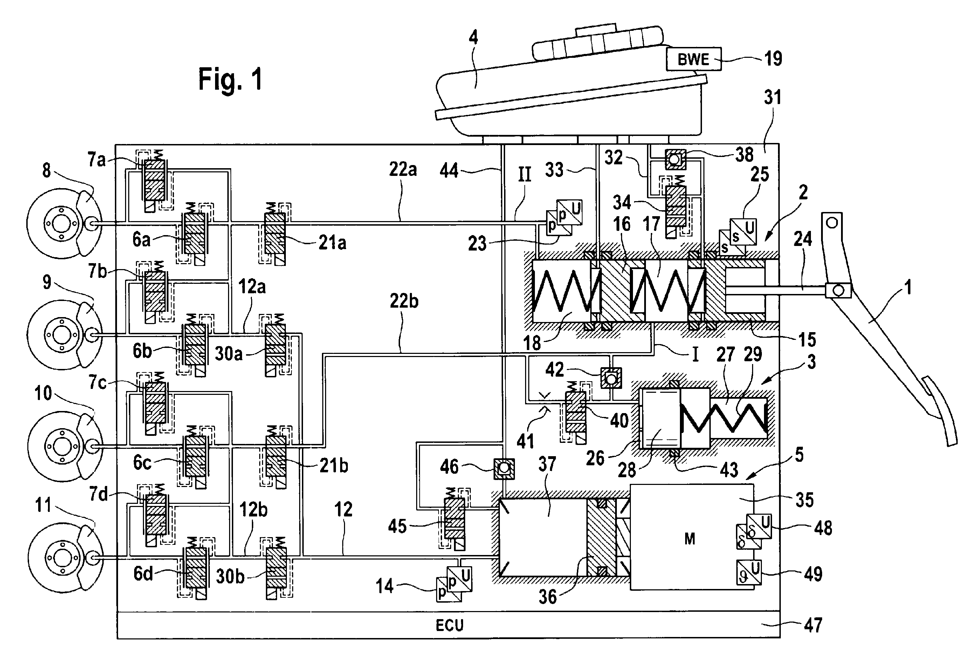

Fig. 1 zeigt ein hydraulisches Schaltbild einer Bremsanlage, die zur Durchführung eines erfindungsgemäßen Verfahrens geeignet ist. Die dargestellte Bremsanlage besteht im Wesentlichen aus einer mittels eines Betätigungs- bzw. Bremspedals 1 betätigbaren hydraulischen Betätigungseinheit 2, einem mit der hydraulischen Betätigungseinheit 2 zusammen wirkenden Wegsimulator 3, einem der hydraulischen Betätigungseinheit 2 zugeordneten Druckmittelvorratsbehälter 4 mit einer elektrischen Füllstandswarneinrichtung 19, einer elektrisch steuerbaren Druck- und Volumenstelleinrichtung 5, elektrisch steuerbaren Druckmodulations- bzw. Einlass-und Auslassventilen 6a-6d, 7a-7d, die paarweise über Mittenanschlüsse hydraulisch zusammengeschaltet sind, an die Radbremsen 8, 9, 10, 11 eines nicht dargestellten Kraftfahrzeuges angeschlossen sind. Die Eingangsanschlüsse der Einlassventile 6a-6d werden mittels Systemdruckleitungen 12a, 12b mit einem Druck versorgt, der als Systemdruck bezeichnet wird. Der Ansteuerung sämtlicher elektrisch betätigbaren Komponenten dient eine elektronische Steuer-und Regeleinheit 47.

Die vorhin genannten Komponenten 6a-6d, 7a-7d, 12a, 12b können zu einem elektrohydraulischen Modul zusammen gefasst werden und somit eine näher nicht bezeichnete Druckmodulationseinheit bilden.

Wie außerdem in der Zeichnung dargestellt ist, weist die hydraulische Betätigungseinheit 2 der beispielsgemäßen Bremsanlage in einer elektrohydraulischen Steuer- und Regeleinheit 31 zwei hintereinander angeordnete hydraulische Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptbremszylinder bilden. Die Druckräume 17, 18 stehen einerseits über in den Kolben 15, 16 ausgebildete radiale Bohrungen sowie entsprechende Druckausgleichsleitungen 32, 33 mit dem Druckmittelvorratsbehälter 4 in Verbindung, wobei diese durch eine Relativbewegung der Kolben 15, 16 gegenüber der elektrohydraulischen Steuer- und Regeleinheit 31 absperrbar sind, und andererseits mittels hydraulischer Leitungen 22a (Bremskreis II), 22b (Bremskreis I) mit Systemdruckleitungen 12a, 12b in Verbindung, über die die Druckmodulationsventile 6a-6d; 7a-7d an die Betätigungseinheit 2 angeschlossen sind. Dabei ist in der Druckausgleichsleitung 32 eine Parallelschaltung eines stromlos offenen (SO-) Diagnoseventils 34 mit einem zum Druckmittelvorratsbehälter 4 hin schließenden Rückschlagventil 38 enthalten. Die Hauptbremszylinderdruckräume 17, 18 sind über die hydraulischen Leitungen 22a, 22b und je ein Trennventil 21a, 21b, die als elektrisch betätigbare, vorzugsweise stromlos offene (SO-) 2/2-Wegeventile ausgebildet sind, mit den hydraulischen Systemdruckleitungen 12a, 12b verbunden. Ein an den Druckraum 18 angeschlossener Drucksensor 23 erfasst den im Druckraum 18 durch ein Verschieben des zweiten Kolbens 16 aufgebauten Druck. Außerdem nehmen die Druckräume 17, 18 nicht näher bezeichnete Rückstellfedern auf, die die Kolben 15, 16 bei unbetätigtem Hauptbremszylinder in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Außerdem ist aus der zeichnerischen Darstellung der beispielgemäßen Bremsanlage ersichtlich, dass der vorhin genannte Wegsimulator 3 hydraulisch ausgeführt ist und im Wesentlichen aus einer Simulatorkammer 26, einer eine Simulatorfeder 29 aufnehmenden Simulatorfederkammer 27 sowie einem die beiden Kammern 26, 27 voneinander trennenden Simulatorkolben 28 besteht. Dabei ist die Simulatorkammer 26 durch Aktivierung eines stromlos geschlossenen Simulatorfreigabeventils 40 an den ersten Druckraum 17 des Tandemhauptzylinders 2 anschließbar. Antiparallel zum Simulatorfreigabeventil 40 ist ein Rückschlagventil 42 angeordnet, das unabhängig vom Schaltzustand des Simulatorfreigabeventils 40 ein weitgehend ungehindertes Zurückströmen des Druckmittels von der Simulatorkammer 26 zum Hauptbremszylinder-Druckraum 17 ermöglicht. In der Strömungsrichtung vom Hauptbremszylinder-Druckraum 17 zur Simulatorkammer 26 ist dem Simulatorfreigabeventil 40 eine hydraulische Blende vorgeschaltet, die mit dem Bezugszeichen 41 versehen ist. Der Abdichtung des Simulatorkolbens 28 dient ein lediglich schematisch angedeuteter Dichtring 43.

Wie weiterhin der Figur 1 der Zeichnung zu entnehmen ist, ist die eingangs erwähnte, elektrisch steuerbare Druck- und Volumenstelleinrichtung 5 beispielsgemäß als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines nicht dargestellten Rotations-Translationsgetriebes betätigbar ist und der einen Druckraum 37 begrenzt.

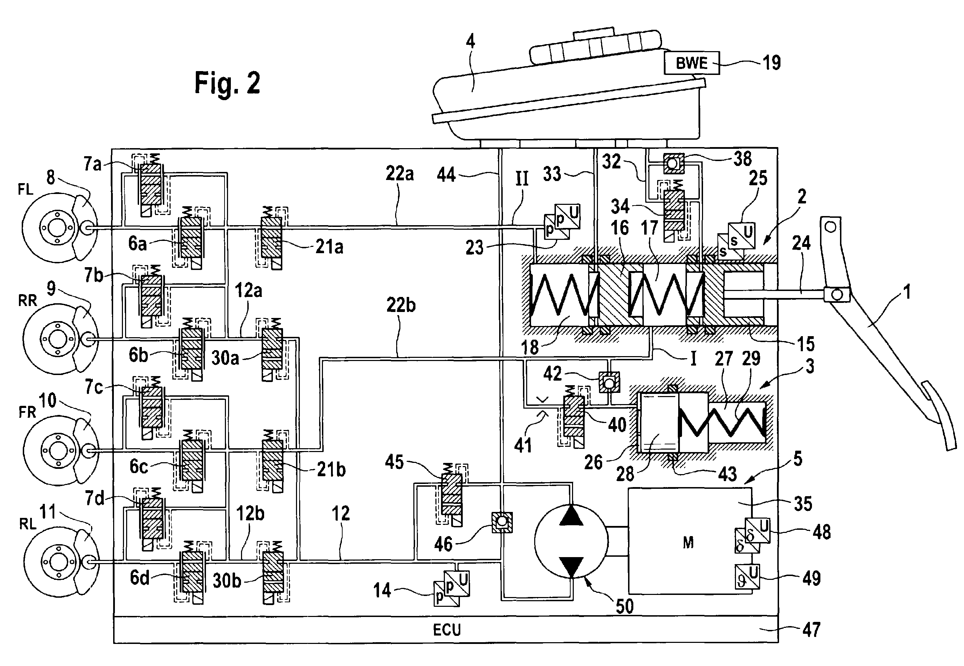

In Fig. 2 ist dargestellt, dass die elektrisch steuerbare Druck- und Volumenstelleinrichtung 5 auch durch eine von einem Elektromotor angetriebene Pumpe 50 dargestellt werden kann. Während die in Fig.1 dargestellte Variante der Druck-und Volumenstelleinrichtung 5 das Druckmittel intern bereit hält und bei Bedarf unter Druck setzt und abgibt, saugt die in Fig. 2 dargestellte Pumpen-Variante die jeweils benötigte Druckmittelmenge aus dem Druckmittelvorratsbehälter 4 an, um diese unter Druck zu setzen und abzugeben. Die in Fig. 1 dargestellte Kolben-Variante ist volumenmäßig erschöpfbar. Wenn der Kolben 36 das Druckmittel aus dem Druckraum 37 verdrängt hat, kann weiteres Druckmittel erst unter Druck gesetzt und abgegeben werden, nachdem die Druck- und Volumenabgabe unterbrochen und der Kolben 36 zurückgefahren wurde, um neues Druckmittel aus dem Behälter 4 nachzusaugen. Die in Fig. 2 dargestellt Pumpenvariante ist dagegen bei intaktem Bremssystem nicht erschöpfbar, weil im Druckmittelvorratsbehälter 4 mehr Druckmittel vorgehalten ist, als durch unter Druck Setzen von den druckbeaufschlagbaren Hydraulikkomponenten aufgenommen werden kann.

Um eine geeignete Regelung des dem Elektromotor 35 zugeführten elektrischen Stromes zu ermöglichen, sind in beiden Ausführungsbeispielen die charakteristischen Betriebsgrößen des Elektromotors 35 erfassende Sensoren, insbesondere Stromsensoren für dessen Phasenströme vorgesehen. Als weiteres Beispiel ist ein der Erfassung der Rotorlage des Elektromotors 35 dienender, lediglich schematisch angedeuteter Rotorlagensensor mit dem Bezugszeichen 48 bezeichnet. Zusätzlich kann auch ein Temperatursensor 49 zum Erfassen der Temperatur der Motorwicklung verwendet werden.

An die Druck- und Volumenstelleinrichtung 5 ist eine Systemdruckleitung 12 angeschlossen, die diese mit elektrisch betätigbaren Zuschaltventilen 30a, 30b verbindet. Durch Betätigen des ersten, elektrisch betätigbaren Zuschaltventils 30a ist die Systemdruckleitung 12 mit der Kreisdruckleitung 12a und durch Betätigen eines zweiten, ebenfalls elektrisch betätigbaren Zuschaltventils 30b mit der Kreisdruckleitung 12b verbindbar. Eine Druckmittelzufuhr vom Druckmittelvorratsbehälter 4 zur Druck- und Volumenstelleinrichtung 5 erfolgt über eine Druckmittelzufuhrleitung 44, die entsprechend ihrem zur Minimierung von Ansaugwiderständen groß gewählten Strömungsquerschnitt in Fig.1 und Fig. 2 als dicker gezeichnete hydraulische Verbindung dargestellt ist.

In Fig. 1 ist in die Druckmittelzufuhrleitung 44 ein zum Druckmittelvorratsbehälter 4 hin schließendes Rückschlagventil 46 eingefügt, das das erwähnte Nachsaugen von Druckmittel in den Druckraum 37 ermöglicht, während in Fig. 2 die Druckmittelzufuhrleitung 44 direkt an die Pumpe 50 angeschlossen ist und das Rückschlagventil 46 zwischen Druckmittelleitung 44 und Systemdruckleitung 12 geschaltet ist, so dass bei rückwärts, d.h. von der Systemdruckleitung 12 zur Druckmittelzufuhrleitung 44, fördernder Pumpe 50, ein möglicher Unterdruck in der Systemdruckleitung 12 vermieden wird. Ein zwischen Systemdruckleitung 12 und Druckmittelzufuhrleitung 44 geschaltetes, elektromagnetisch betätigbares, stromlos geschlossenes (SG-) 2/2-Wegeventil 45 ermöglicht bei Bedarf einen ventilsteuerbaren Systemdruckabbau in den Druckmittelvorratsbehälter 4.

Ein bevorzugtes Verfahren zum Betrieb der beschriebenen Bremsanlagen ist in den folgenden Patentansprüchen und der nachfolgenden Beschreibung offenbart. Ansonsten können bei der vorliegenden Erfindung zahlreiche Modifikationen vorgeschlagen werden, ohne vom Rahmen der Erfindung abzuweichen.

Erfindungsgemäß werden zum Einstellen radindividueller Bremsdrücke die Einlass- und Auslassventile 6a-6d, 7a-7d analog angesteuert, indem sie mit unterschiedlichen elektrischen Strömen beaufschlagt werden, um einen von der Druck- und Volumenstelleinrichtung 5 bereit gestellten Druckmittelvolumenstrom den Radbremsen 8-11 mit einem Druckänderungsbedarf zuzuordnen.

Mit der elektrisch steuerbaren Druck- und Volumenstelleinrichtung 5 werden Druckmittelvolumina verschoben, die anhand der gewünschten Radbremsdruck-Änderungen bemessen werden und mittels der unterschiedlichen Ansteuerströme der Bremsdruckmodulationsventile 6a-6d, 7a-7d als Zustrom zu den ausgewählten Radbremsen oder als Volumenentnahmestrom aus den für einen Druckabbau vorgesehenen Radbremsen geleitet werden.

Zur Druckerhöhung in einer ausgewählten Radbremse werden die Ansteuerströme für die Druckaufbau- bzw. Einlassventile der anderen Radbremsen gegenüber der ausgewählten Radbremse erhöht und mit der steuerbaren Druck- und Volumenstelleinrichtung 5 wird ein Druckmittelvolumen in die ausgewählte Radbremse verschoben.

Wenn ein gleichzeitiger Druckaufbau in mehreren Radbremsen benötigt wird, werden zur Druckerhöhung in den ausgewählten Radbremsen die Ansteuerströme der Bremsdruckaufbau- bzw. Einlassventile der verbleibenden Radbremsen erhöht und mit der elektrisch steuerbaren Druck- und Volumenstelleinrichtung 5 wird ein Druckmittelvolumen in die ausgewählten Radbremsen verschoben.

Vorteilhafterweise werden die Ansteuerströme der Einlassventile der ausgewählten Radbremsen während des Druckaufbaus zyklisch im Verhältnis zueinander abgesenkt, so dass die Zeitdauer der Stromabsenkung den Anteil der ausgewählten Radbremse am Druckaufbauvolumen definiert.

Zum Druckabbau in einer ausgewählten Radbremse werden die Ansteuerströme für die Druckabbau- bzw. Auslassventile der anderen Radbremsen gegenüber der ausgewählten Radbremse erhöht und mit der elektrisch steuerbaren Druck- und Volumenstelleinrichtung 5 wird ein Druckmittelvolumen aus der ausgewählten Radbremse entnommen.

Wenn ein gleichzeitiger Druckabbau in mehreren Radbremsen benötigt wird, werden zum Druckabbau in den ausgewählten Radbremsen die Ansteuerströme der Bremsdruckabbau- bzw. Auslassventile der ausgewählten Radbremsen reduziert und mit der elektrisch steuerbaren Druck- und Volumenstelleinrichtung wird ein entsprechend bemessenes Druckmittelvolumen aus den ausgewählten Radbremsen entnommen.

Die Ansteuerströme der Auslassventile der ausgewählten Radbremsen während des Druckabbaus werden bevorzugt zyklisch im Verhältnis zueinander abgesenkt, so dass die Zeitdauer der Stromabsenkung den Anteil der ausgewählten Radbremse am Druckabbauvolumen definiert.

Bevorzugt wird zumindest ein Teil des Abbauvolumenstroms von Seiten der Druck- und Volumenstelleinrichtung durch ein Öffnen des Elektromagnetventils 45 bereitgestellt.

Die weitere Funktionsweise der beispielgemäßen Bremsanlage sowohl in der bevorzugten Betriebsart "Brake-by-wire" als auch in der sog. Rückfallbetriebsart ergibt sich für den auf dem einschlägigen technischen Gebiet tätigen Fachmann aus dem Offenbarungsgehalt der vorliegenden Patentanmeldung und braucht deswegen nicht näher erläutert zu werden.

## Patentansprüche

1. Verfahren zum Betrieb einer Bremsanlage für Kraftfahrzeuge, die in einer "Brake-by-wire"-Betriebsart sowohl vom Fahrzeugführer als auch unabhängig vom Fahrzeugführer ansteuerbar ist, mit
• hydraulischen Radbremsen,
• einem Hauptbremszylinder (2) mit wenigstens einem Druckraum (17), mit dessen Druck in einer Rückfallbetriebsart zumindest die Radbremsen einer Vorderachse des Kraftfahrzeugs, insbesondere alle Radbremsen (8, 9, 10, 11), beaufschlagbar sind,
• einem Druckmittelvorratsbehälter (4),
• einem Bremspedal (1) zum Betätigen des Hauptbremszylinders (2),
• Bremskreisen (I, II), die Hauptbremszylinder- und Radbremsen-Druckräume und hydraulische Verbindungen aufweisen,
• einem elektrisch betätigbaren Trennventil (21a, 21b) je Bremskreis (I, II) zum Trennen des Bremskreises in einen vom Fahrzeugführer (22a, 22b) und einen "by-wire" (12a, 12b) druckbeaufschlagbaren Bremskreisabschnitt,
• einem elektrisch betätigbaren Einlassventil (6a-6d) und einem elektrisch betätigbaren Auslassventil (7a-7d) je Radbremse (8-11) zum Einstellen radindividueller Bremsdrücke,
• einer elektrisch steuerbaren Druck- und Volumenstelleinrichtung (5),
• einem elektrisch betätigbaren, insbesondere stromlos geschlossenen, Zuschaltventil (30a, 30b) je Brems-kreis (II, I) zur hydraulischen Verbindung der elektrisch steuerbaren Druck- und Volumenstellein-richtung (5) mit dem "by-wire" druckbeaufschlagbaren Bremskreisabschnitt (12a, 12b),
• einer mit zumindest einem Druckraum (17) des Hauptbremszylinders (2) hydraulisch verbindbaren Simulationseinrichtung (3), die mittels eines elektrisch oder mechanisch betätigbaren Simulatorfreigabeventils (32) aktivierbar ist, mit einer voreingestellten Charakteristik, und die in der "Brake-by-wire"-Betriebsart dem Fahrzeugführer ein angenehmes Bremspedalgefühl vermittelt, und
• einer elektronischen Steuer- und Regeleinheit (46), insbesondere zur Ansteuerung der Druck- und Volumenstelleinrichtung (5), der Trennventile (21a, 21b), der Zuschaltventile (30a, 30b), des Simulatorfreigabeventils (32) sowie der Einlass- und Auslassventile (6a-6d; 7a-7d),
**dadurch gekennzeichnet, dass** zum Einstellen radindividueller Bremsdrücke die Einlass- und Auslassventile (6a-6d; 7a-7d) analog angesteuert werden, indem sie mit unterschiedlichen elektrischen Strömen beaufschlagt werden, um einen von der Druck- und Volumenstelleinrichtung (5) bereit gestellten Druckmittelvolumenstrom den Radbremsen (8-11) mit einem Druckänderungsbedarf zuzuordnen, wobei mit der elektrisch steuerbaren Druck-und Volumenstelleinrichtung (5) Druckmittelvolumina verschoben werden, die anhand der gewünschten Radbremsdruck-Änderungen bemessen werden und mittels der unterschiedlichen Ansteuerströme der Ein- und Auslassventile (6a-6d; 7a-7d) als Zustrom zu den ausgewählten Radbrem-sen oder als Volumenentnahmestrom aus den für einen Druckabbau vorgesehenen Radbremsen geleitet werden.

2. Verfahren nach Anspruch 1, **dadurch gekennzeichnet, dass** zur Druckerhöhung in einer ausgewählten Radbremse die Ansteuerströme für die Einlassventile (6a-6d) der anderen Radbremsen gegenüber der ausgewählten Radbremse erhöht werden und mit der steuerbaren Druck- und Volumenstelleinrichtung (5) ein Druckmittelvolumen in die ausgewählte Radbremse verschoben wird.

3. Verfahren nach Anspruch 1, **dadurch gekennzeichnet, dass** zum Druckabbau in einer ausgewählten Radbremse die Ansteuerströme für die Auslassventile (7a-7d) der anderen Radbremsen gegenüber der ausgewählten Radbremse erhöht werden und mit der elektrisch steuerbaren Druck- und Volumenstelleinrichtung (5) ein Druckmittelvolumen aus der ausgewählten Radbremse entnommen wird.

4. Verfahren nach Anspruch 1, **dadurch gekennzeichnet, dass** wenn ein gleichzeitiger Druckaufbau in mehreren Radbremsen benötigt wird, zur Druckerhöhung in den ausgewählten Radbremsen die Ansteuerströme der Einlassventile (6a-6d) der verbleibenden Radbremsen erhöht werden und mit der elektrisch steuerbaren Druck- und Volumenstelleinrichtung (5) ein Druckmittelvolumen in die ausgewählten Radbremsen verschoben wird.

5. Verfahren nach Anspruch 1, **dadurch gekennzeichnet, dass** wenn ein gleichzeitiger Druckabbau in mehreren Radbremsen benötigt wird, zum Druckabbau in den ausgewählten Radbremsen die Ansteuerströme der Auslassventile (7a-7d) der ausgewählten Radbremsen reduziert werden und mit der elektrisch steuerbaren Druck- und Volumenstelleinrichtung (5) ein entsprechend bemessenes Druckmittelvolumen aus den ausgewählten Radbremsen entnommen wird.

6. Verfahren nach Anspruch 4, **dadurch gekennzeichnet, dass** die Ansteuerströme der Einlassventile (6a-6d) der ausgewählten Radbremsen während des Druckaufbaus zyklisch im Verhältnis zueinander abgesenkt werden, so dass die Zeitdauer der Stromabsenkung den Anteil der ausgewählten Radbremse am Druckaufbauvolumen definiert.

7. Verfahren nach Anspruch 5, **dadurch gekennzeichnet, dass** die Ansteuerströme der Auslassventile (7a-7d) der ausgewählten Radbremsen während des Druckabbaus zyklisch im Verhältnis zueinander abgesenkt werden, so dass die Zeitdauer der Stromabsenkung den Anteil der ausgewählten Radbremse am Druckabbauvolumen definiert.

8. Verfahren nach einem der Ansprüche 3, 5 oder 7, **dadurch gekennzeichnet, dass** zumindest ein Teil des Abbauvolumenstroms von Seiten der Druck- und Volumenstelleinrichtung durch ein Öffnen eines elektromagnetisch betätigbaren, stromlos geschlossenen (SG-) 2/2-Wegeventils (45) bereitgestellt wird, welches zwischen eine Systemdruckleitung (12), welche die Druck- und Volumenstelleinrichtung (5) mit den Zuschaltventilen (30a, 30b) verbindet, und eine Druckmittelzufuhrleitung (44), welche die Druck- und Volumenstelleinrichtung (5) mit dem Druckmittelvorratsbehälter (4) verbindet, geschaltet ist.

9. Bremsanlage für Kraftfahrzeuge, die in einer "Brake-by-wire"-Betriebsart sowohl vom Fahrzeugführer als auch unabhängig vom Fahrzeugführer ansteuerbar ist, mit
• hydraulischen Radbremsen,
• einem Hauptbremszylinder (2) mit wenigstens einem Druckraum (17), mit dessen Druck in einer Rückfallbetriebsart zumindest die Radbremsen einer Vorderachse des Kraftfahrzeugs, insbesondere alle Radbremsen (8, 9, 10, 11), beaufschlagbar sind,
• einem Druckmittelvorratsbehälter (4),
• einem Bremspedal (1) zum Betätigen des Hauptbremszylinders (2),
• Bremskreisen (I, II), die Hauptbremszylinder- und Radbremsen-Druckräume und hydraulische Verbindungen aufweisen,
• einem elektrisch betätigbaren Trennventil (21a, 21b) je Bremskreis (I, II) zum Trennen des Bremskreises in einen vom Fahrzeugführer (22a, 22b) und einen "by-wire" (12a, 12b) druckbeaufschlagbaren Bremskreisabschnitt,
• einem elektrisch betätigbaren Einlassventil (6a-6d) und einem elektrisch betätigbaren Auslassventil (7a-7d) je Radbremse (8-11) zum Einstellen radindividueller Bremsdrücke,
• einer elektrisch steuerbaren Druck- und Volumenstelleinrichtung (5),
• einem elektrisch betätigbaren, insbesondere stromlos geschlossenen, Zuschaltventil (30a, 30b) je Bremskreis (II, I) zur hydraulischen Verbindung der elektrisch steuerbaren Druck- und Volumenstelleinrichtung (5) mit dem "by-wire" druckbeaufschlagbaren Bremskreisabschnitt (12a, 12b),
• einer mit zumindest einem Druckraum (17) des Hauptbremszylinders (2) hydraulisch verbindbaren Simulationseinrichtung (3), die mittels eines elektrisch oder mechanisch betätigbaren Simulatorfreigabeventils (32) aktivierbar ist, mit einer voreingestellten Charakteristik, und die in der "Brake-by-wire"-Betriebsart dem Fahrzeugführer ein angenehmes Bremspedalgefühl vermittelt, und
• einer elektronischen Steuer- und Regeleinheit (46), insbesondere zur Ansteuerung der Druck- und Volumenstelleinrichtung (5), der Trennventile (21a, 21b), der Zuschaltventile (30a, 30b), des Simulatorfreigabeventils (32) sowie der Einlass- und Auslassventile (6a-6d; 7a-7d),
wobei die Ein- und Auslassventile (6a-6d, 7a-7d) für jedes Rad als analog regelbare, stromlos offene 2/2-Wegeventile ausgebildet sind, **dadurch gekennzeichnet, dass** in der elektronischen Steuer- und Regeleinheit ein Verfahren nach einem der Ansprüche 1 bis 7 durchgeführt wird.

10. Bremsanlage nach Anspruch 9, **dadurch gekennzeichnet, dass** die den Radbremsen (8-11) abgewandten Anschlüsse der Auslassventile (7a-7d) mit den den Radbremsen (8-11) abgewandten Anschlüssen der Einlassventile (6a-6d) kreisweise zusammen geschaltet sind.

11. Bremsanlage nach Anspruch 9 oder 10, **dadurch gekennzeichnet, dass** die Einbauorientierung der Auslassventile (7a-7d) so gewählt ist, dass sie von den Radbremsdrücken in Öffnungsrichtung beaufschlagt werden.

12. Bremsanlage nach einem der Ansprüche 9 bis 11, **dadurch gekennzeichnet, dass** die Einbauorientierung der Einlassventile (6a-6d) so gewählt ist, dass sie von den Radbremsdrücken in Schließrichtung beaufschlagt werden.

13. Bremsanlage nach einem der Ansprüche 9 bis 12, **dadurch gekennzeichnet, dass** eine Systemdruckleitung (12), welche die Druck- und Volumenstelleinrichtung (5) mit den Zuschaltventilen (30a, 30b) verbindet, und eine Druckmittelzufuhrleitung (44), welche die Druck- und Volumenstelleinrichtung (5) mit dem Druckmittelvorratsbehälter (4) verbindet, vorgesehen sind, und dass ein zwischen Systemdruckleitung (12) und Druckmittelzufuhrleitung (44) geschaltetes, elektromagnetisch betätigbares, stromlos geschlossenes (SG-) 2/2-Wegeventil (45) als Bestandteil der Druck- und Volumenstelleinrichtung (5) vorgesehen ist.

14. Bremsanlage nach Anspruch 13, **dadurch gekennzeichnet, dass** bei Druck- und Volumenabbauvorgängen ein Druckmittelvolumenstrom von der Systemdruckleitung (12) zur Druckmittelzufuhrleitung (44) über das elektromagnetisch betätigbare Ventil (45) geführt wird.

## Claims

1. Method for operating a brake system for motor vehicles, which can be controlled in a "brake-by-wire" operating mode both by the vehicle driver and also independently of the vehicle driver, with
• hydraulic wheel brakes
• a brake master cylinder (2) having at least one pressure space (17), with the pressure in which at least the wheel brakes of a front axle of the motor vehicle, in particular all the wheel brakes (8, 9, 10, 11), can be supplied in a fall-back operating mode,
• a pressure medium reservoir (4),
• a brake pedal (1) for actuating the brake master cylinder (2),
• brake circuits (I, II), which have brake master cylinder and wheel brake pressure spaces and hydraulic connections,
• an electrically actuable isolating valve (21a, 21b) for each brake circuit (I, II) for dividing the brake circuit into a brake circuit section (22a, 22b) which can be subjected to pressure by the vehicle driver and a brake circuit section (12a, 12b) which can be subjected to pressure "by wire",
• an electrically actuable inlet valve (6a-6d) and an electrically actuable outlet valve (7a-7d) for each wheel brake (8-11) for setting wheel-specific brake pressures,
• an electrically controllable pressure and volume setting device (5),
• an electrically actuable connection valve (30a, 30b), in particular a valve of this kind which is closed when deenergized, for each brake circuit (II, I) for hydraulic connection of the electrically controllable pressure and volume setting device (5) to the brake circuit section (12a, 12b) which can be subjected to pressure "by wire",
• a simulation device (3), which can be connected hydraulically to at least one pressure space (17) of the brake master cylinder (2) and can be activated by means of an electrically or mechanically actuable simulator enable valve (32), having a preset characteristic, and which gives the vehicle driver a pleasant brake pedal feel in the "brake-by-wire" operating mode, and
• an electronic open- and closed-loop control unit (46), in particular for controlling the pressure and volume setting device (5), the isolating valves (21a, 21b), the connection valves (30a, 30b), the simulator enable valve (32) and the inlet and outlet valves (6a-6d; 7a-7d),
**characterized in that**, to set wheel-specific brake pressures, the inlet and outlet valves (6a, 6d; 7a-7d) are controlled in an analog manner by being supplied with different electric currents in order to allocate a pressure medium volume flow made available by the pressure and volume setting device (5) to the wheel brakes (8-11) having a requirement for a change in pressure, wherein the electrically controllable pressure and volume setting device (5) is used to displace pressure medium volumes which are proportioned according to the desired changes in wheel brake pressure and, by means of the different control currents of the inlet and outlet valves (6a-6d; 7a-7d), are passed to the selected wheel brakes as an inlet flow or out of the wheel brakes selected for a pressure reduction as a volume discharge flow.

2. Method according to Claim 1, **characterized in that**, to increase the pressure in a selected wheel brake, the control currents for the inlet valves (6a-6d) of the other wheel brakes are increased relative to the selected wheel brake, and a pressure medium volume is displaced into the selected wheel brake by means of the controllable pressure and volume setting device (5).

3. Method according to Claim 1, **characterized in that**, to reduce the pressure in a selected wheel brake, the control currents for the outlet valves (7a-7d) of the other wheel brakes are increased relative to the selected wheel brake, and a pressure medium volume is removed from the selected wheel brake by means of the electrically controllable pressure and volume setting device (5).

4. Method according to Claim 1, **characterized in that**, when a simultaneous pressure buildup is required in several wheel brakes, the control currents of the inlet valves (6a-6d) of the remaining wheel brakes are increased, and a pressure medium volume is displaced into the selected wheel brakes by means of the electrically controllable pressure and volume setting device (5), in order to increase the pressure in the selected wheel brakes.

5. Method according to Claim 1, **characterized in that**, when a simultaneous pressure reduction is required in several wheel brakes, the control currents of the outlet valves (7a-7d) of the selected wheel brakes are reduced, and an appropriately proportioned pressure medium volume is removed from of the selected wheel brakes by means of the electrically controllable pressure and volume setting device (5), in order to reduce the pressure in the selected wheel brakes.

6. Method according to Claim 4, **characterized in that** the control currents of the inlet valves (6a-6d) of the selected wheel brakes are reduced cyclically in relation to one another during pressure buildup, with the result that the duration of current reduction defines the share of the selected wheel brake in the pressure buildup volume.

7. Method according to Claim 5, **characterized in that** the control currents of the outlet valves (7a-7d) of the selected wheel brakes are reduced cyclically in relation to one another during pressure reduction, with the result that the duration of current reduction defines the share of the selected wheel brake in the pressure reduction volume.

8. Method according to one of Claims 3, 5 or 7, **characterized in that** at least some of the reduction volume flow on the part of the pressure and volume setting device is provided by opening an electromagnetically actuable, normally closed (NC) 2/2-way valve (45) which is switched between a system pressure line (12) which connects the pressure and volume setting device (5) to the connection valves (30a, 30b) and a pressure medium feed line (44) which connects the pressure and volume setting device (5) to the pressure medium reservoir (4).

9. Brake system for motor vehicles, which can be controlled in a "brake-by-wire" operating mode both by the vehicle driver and also independently of the vehicle driver, with
• hydraulic wheel brakes
• a brake master cylinder (2) having at least one pressure space (17), with the pressure in which at least the wheel brakes of a front axle of the motor vehicle, in particular all the wheel brakes (8, 9, 10, 11), can be supplied in a fall-back operating mode,
• a pressure medium reservoir (4),
• a brake pedal (1) for actuating the brake master cylinder (2),
• brake circuits (I, II), which have brake master cylinder and wheel brake pressure spaces and hydraulic connections,
• an electrically actuable isolating valve (21a, 21b) for each brake circuit (I, II) for dividing the brake circuit into a brake circuit section (22a, 22b) which can be subjected to pressure by the vehicle driver and a brake circuit section (12a, 12b) which can be subjected to pressure "by wire",
• an electrically actuable inlet valve (6a-6d) and an electrically actuable outlet valve (7a-7d) for each wheel brake (8-11) for setting wheel-specific brake pressures,
• an electrically controllable pressure and volume setting device (5),
• an electrically actuable connection valve (30a, 30b), in particular a valve of this kind which is closed when deenergized, for each brake circuit (II, I) for hydraulic connection of the electrically controllable pressure and volume setting device (5) to the brake circuit section (12a, 12b) which can be subjected to pressure "by wire",
• a simulation device (3), which can be connected hydraulically to at least one pressure space (17) of the brake master cylinder (2) and can be activated by means of an electrically or mechanically actuable simulator enable valve (32), having a preset characteristic, and which gives the vehicle driver a pleasant brake pedal feel in the "brake-by-wire" operating mode, and
• an electronic open- and closed-loop control unit (46), in particular for controlling the pressure and volume setting device (5), the isolating valves (21a, 21b), the connection valves (30a, 30b), the simulator enable valve (32) and the inlet and outlet valves (6a-6d; 7a-7d), wherein the inlet and outlet valves (6a-6d, 7a-7d) for each wheel are designed as 2/2-way valves which can be subjected to analog control and are open when deenergized, **characterized in that**, in the electronic open-and closed-loop control unit, a method according to one of Claims 1 to 7 is carried out.

10. Brake system according to Claim 9, **characterized in that** the ports of the outlet valves (7a-7d) which face away from the wheel brakes (8-11) are connected in circuits with the ports of the inlet valves (6a-6d) which face away from the wheel brakes (8-11).

11. Brake system according to Claim 9 or 10, **characterized in that** the installation orientation of the outlet valves (7a-7d) is chosen in such a way that they are acted upon in the opening direction by the wheel brake pressures.

12. Brake system according to one of Claims 9 to 11, **characterized in that** the installation orientation of the inlet valves (6a-6d) is chosen in such a way that they are acted upon in the closing direction by the wheel brake pressures.

13. Brake system according to one of Claims 9 to 12, **characterized in that** a system pressure line (12) which connects the pressure and volume setting device (5) to the connection valves (30a, 30b) and a pressure medium feed line (44) which connects the pressure and volume setting device (5) to the pressure medium reservoir (4) are provided, and **in that** an electromagnetically actuable 2/2-way valve (45) which is inserted between the system pressure line (12) and the pressure medium feed line (44) and is closed when deenergized as part of the pressure and volume setting device (5) is provided.

14. Brake system according to Claim 13, **characterized in that**, during pressure and volume reduction processes, a pressure medium volume flow is passed from the system pressure line (12) to the pressure medium feed line (44) via the electromagnetically actuable valve (45).

## Revendications

1. Procédé pour faire fonctionner un système de freinage pour véhicules automobiles, lequel peut être commandé selon un mode de fonctionnement « brake-by-wire » (frein à câble) par le conducteur du véhicule tout comme également de manière indépendante du conducteur de véhicule, avec
- des freins de roue hydrauliques,
- un maître-cylindre de frein (2) avec au moins une chambre de pression (17) avec la pression de laquelle, dans un mode de fonctionnement d'urgence, au moins les freins de roue d'un essieu avant du véhicule automobile, en particulier tous les freins de roue (8, 9, 10, 11) peuvent être sollicités,
- un réservoir de fluide sous pression (4),
- une pédale de freinage (1) pour actionner le maître-cylindre de freinage (2),
- des circuits de freinage (I, II), lesquels présentent des chambres de pression de maître-cylindre de freinage et de roues de frein et des liaisons hydrauliques,
- une soupape de séparation actionnable électriquement (21a, 21b), par circuit de freinage (I, II), pour séparer le circuit de freinage en un segment de circuit de freinage pouvant être sollicité par pression par un conducteur de véhicule (22a, 22b) et un segment de circuit de freinage pouvant être sollicité par pression « by wire » (12a, 12b),
- une soupape d'entrée actionnable électriquement (6a-6d) et une soupape de sortie actionnable électriquement (7a-7d), par frein de roue (8-11), pour le réglage de pressions de freinage individuelles par roue,
- un dispositif de réglage de pression et de volume pouvant être commandé électriquement (5),
- une soupape de mise en circuit (30a, 30b) actionnable électriquement, en particulier fermée sans courant, par circuit de freinage (II, I), pour le raccordement hydraulique du dispositif de réglage de pression et de volume pouvant être commandé électriquement (5) au segment de circuit de freinage (12a, 12b) pouvant être sollicité par pression « by-wire »,
- un dispositif de simulation (3) pouvant être raccordé hydrauliquement à au moins une chambre de pression (17) du maître-cylindre de freinage (2), lequel peut être activé au moyen d'une soupape de libération de simulateur (32) pouvant être manoeuvrée électriquement ou mécaniquement, avec une caractéristique préréglée, et lequel confère au conducteur de véhicule une sensation de pédale de freinage agréable dans le mode de fonctionnement « brake-by-wire », et
- une unité de commande et de régulation électronique (46), en particulier pour commander le dispositif de réglage de pression et de volume (5), les soupapes de séparation (21a, 21b), les soupapes de mise en circuit (30a, 30b), la soupape de libération de simulateur (32) ainsi que les soupapes d'entrée et de sortie (6a-6d ; 7a-7d),
**caractérisé en ce que**,
pour le réglage de pressions de freinage individuelles par roue, les soupapes d'entrée et de sortie (6a-6d ; 7a-7d) sont commandées de manière analogique **en ce qu'**elles sont alimentées par des courants électriques différents pour associer un débit volumique de fluide sous pression, mis à disposition par le dispositif de réglage de pression et de volume (5), aux freins de roue (8-11) avec un besoin de changement de pression, dans lequel, avec le dispositif de réglage de pression et de volume pouvant être commandé électriquement (5), des volumes de fluide sous pression sont déplacés, lesquels sont mesurés à l'aide des modifications de pression de frein de roue souhaitées et sont conduits au moyen des courants de commande différents des soupapes d'entrée et de sortie (6a-6d ; 7a-7d) en tant qu'afflux vers les freins de roue sélectionnés ou en tant que flux de prélèvement volumique hors des freins de roue prévus pour une diminution de pression.

2. Procédé selon la revendication 1, **caractérisé en ce que**, pour l'augmentation de la pression dans un frein de roue sélectionné, on augmente les courants de commande pour les soupapes d'entrée (6a-6d) des autres freins de roue par rapport au frein de roue sélectionné, et un volume de fluide sous pression est déplacé dans le frein de roue sélectionné avec le dispositif de réglage de pression et de volume (5) pouvant être commandé.

3. Procédé selon la revendication 1, **caractérisé en ce que**, pour la diminution de pression dans un frein de roue sélectionné, on augmente les courants de commande pour les soupapes de sortie (7a-7d) des autres freins de roue par rapport au frein de roue sélectionné, et un volume de fluide sous pression étant prélevé du frein de roue sélectionné avec le dispositif de réglage de pression et de volume (5) pouvant être commandé électriquement.

4. Procédé selon la revendication 1, **caractérisé en ce que**, lorsqu'une augmentation de pression simultanée est nécessaire dans plusieurs freins de roue, pour l'augmentation de la pression dans les freins de roue sélectionnés, on augmente les courants de commande des soupapes d'entrée (6a-6d) des freins de roue qui subsistent, et un volume de fluide sous pression étant déplacé dans le frein de roue sélectionné avec le dispositif de réglage de pression et de volume (5) pouvant être commandé électriquement.

5. Procédé selon la revendication 1, **caractérisé en ce que**, lorsqu'une diminution de pression simultanée est nécessaire dans plusieurs freins de roue, pour la diminution de pression dans les freins de roue sélectionnés, on réduit les courants de commande des soupapes de sortie (7a-7d) des freins de roue sélectionnés, et un volume de fluide sous pression dimensionné de manière correspondante étant prélevé des freins de roue sélectionnés avec le dispositif de réglage de pression et de volume pouvant être commandé électriquement (5).

6. Procédé selon la revendication 4, **caractérisé en ce que** les courants de commande des soupapes d'entrée (6a- 6d) des freins de roue sélectionnés sont abaissés de manière cyclique les uns par rapport aux autres pendant l'augmentation de pression de sorte que la durée de la baisse de courant définit la part du frein de roue sélectionné concernant le volume d'augmentation de pression.

7. Procédé selon la revendication 5, **caractérisé en ce que** les courants de commande des soupapes de sortie (7a-7d) des freins de roue sélectionnés sont abaissés de manière cyclique les uns par rapport aux autres pendant la diminution de pression de sorte que la durée de la baisse de courant définit la part du frein de roue sélectionné concernant le volume de diminution de pression.

8. Procédé selon l'une des revendications 3, 5 ou 7, **caractérisé en ce qu'**au moins une partie du débit volumique de diminution est mise à disposition par le dispositif de réglage de pression et de volume grâce à une ouverture de soupape à 2/2 voies (45) fermée sans courant (SG-) actionnable électriquement, laquelle est montée entre une conduite de refoulement système (12) qui relie le dispositif de réglage de pression et de volume (5) aux soupapes de mise en circuit (30a, 30b) et une conduite d'amenée de fluide sous pression (44) qui relie le dispositif de réglage de pression et de volume (5) au réservoir de fluide sous pression (4).

9. Système de freinage pour véhicules automobiles, lequel peut être commandé selon un mode de fonctionnement « brake-by-wire » (frein à câble) par le conducteur du véhicule tout comme également indépendamment du conducteur du véhicule, avec
- des freins de roue hydrauliques,
- un maître-cylindre de frein (2) avec au moins une chambre de pression (17) avec la pression de laquelle, dans un mode de fonctionnement d'urgence, au moins les freins de roue d'un essieu avant du véhicule automobile, en particulier tous les freins de roue (8, 9, 10, 11) peuvent être sollicités,
- un réservoir de fluide sous pression (4),
- une pédale de freinage (1) pour actionner le maître-cylindre de freinage (2),
- des circuits de freinage (I, II), lesquels présentent des chambres de pression de maître-cylindre de freinage et de roues de frein et des liaisons hydrauliques,
- une soupape de séparation actionnable électriquement (21a, 21b), par circuit de freinage (I, II), pour séparer le circuit de freinage en un segment de circuit de freinage pouvant être sollicité par pression par un conducteur de véhicule (22a, 22b) et un segment de circuit de freinage pouvant être sollicité par pression « by wire » (12a, 12b),
- une soupape d'entrée actionnable électriquement (6a-6d) et une soupape de sortie actionnable électriquement (7a-7d), par frein de roue (8-11), pour le réglage de pressions de freinage individuelles par roue,
- un dispositif de réglage de pression et de volume pouvant être commandé électriquement (5),
- une soupape de mise en circuit (30a, 30b) actionnable électriquement, en particulier fermée sans courant, par circuit de freinage (II, I), pour le raccordement hydraulique du dispositif de réglage de pression et de volume pouvant être commandé électriquement (5) au segment de circuit de freinage (12a, 12b) pouvant être sollicité par pression « by-wire »,
- un dispositif de simulation (3) pouvant être raccordé hydrauliquement à au moins une chambre de pression (17) du maître-cylindre de freinage (2), lequel peut être activé au moyen d'une soupape de libération de simulateur (32) pouvant être manoeuvrée électriquement ou mécaniquement, avec une caractéristique préréglée, et lequel confère au conducteur de véhicule une sensation de pédale de freinage agréable dans le mode de fonctionnement « brake-by-wire », et
- une unité de commande et de régulation électronique (46), en particulier pour commander le dispositif de réglage de pression et de volume (5), les soupapes de séparation (21a, 21b), les soupapes de mise en circuit (30a, 30b), la soupape de libération de simulateur (32) ainsi que les soupapes d'entrée et de sortie (6a-6d ; 7a-7d),
dans lequel les soupapes d'entrée et de sortie (6a-6d, 7a-7d) sont réalisées, pour chaque roue, en tant que soupapes à 2/2 voies ouvertes sans courant pouvant être réglées de manière analogique, **caractérisé en ce qu'**un procédé selon l'une des revendications 1 à 7 est mis en oeuvre dans l'unité de commande et de régulation électronique.

10. Système de freinage selon la revendication 9, **caractérisé en ce que** les raccords, tournant le dos aux freins de roue (8-11), des soupapes de sortie (7a-7d) sont interconnectés par circuit avec les raccords, tournant le dos aux freins de roue (8-11), des soupapes d'entrée (6a-6d).

11. Système de freinage selon la revendication 9 ou 10, **caractérisé en ce que** l'orientation d'encastrement des soupapes de sortie (7a-7d) est sélectionnée d'une manière telle, qu'elles sont sollicitées par les pressions de frein de roue en direction d'ouverture.

12. Système de freinage selon l'une des revendications 9 à 11, **caractérisé en ce que** l'orientation d'encastrement des soupapes d'entrée (6a-6d) est sélectionnée d'une manière telle, qu'elles sont sollicitées par les pressions de frein de roue en direction de fermeture.

13. Système de freinage selon l'une des revendications 9 à 12, **caractérisé en ce que** l'on prévoit une conduite de refoulement système (12), laquelle relie le dispositif de réglage de pression et de volume (5) aux soupapes de mise en circuit (30a, 30b), et une conduite d'amenée de fluide sous pression (44), laquelle relie le dispositif de réglage de pression et de volume (5) au réservoir de fluide sous pression (4), et **en ce que** l'on prévoit une soupape 2/2 voies (45) fermée sans courant (SG-) actionnable électromagnétiquement montée entre la conduite de refoulement système (12) et la conduite d'amenée de fluide sous pression (44) en guise d'élément constitutif du dispositif de réglage de pression et de volume (5).

14. Système de freinage selon la revendication 13, **caractérisé en ce que**, en cas de processus de diminution de pression et de volume, un débit volumique de fluide sous pression est conduit par la conduite de refoulement système (12) vers la conduite d'amenée de fluide sous pression (44) via la soupape actionnable électromagnétiquement (45).
